# EUROPEAN PATENT SPECIFICATION

(11) **EP 3 434 803 B1**
(45) Date of publication and mention of the grant of the patent: **29.04.2020**
(21) Application number: 18186313.5
(22) Date of filing: 30.07.2018
(51) Int. Cl.: C23C 4/02

(54) **PROCESS AND SYSTEM FOR TEMPERATURE CONTROLLED PLASMA SPRAY COATINGS**
VERFAHREN UND ANLAGE ZUR TEMPERATURGEREGELTEN PLASMASPRÜHBESCHICHTUNGEN
PROCÉDÉ ET SYSTÈME POUR REVÊTEMENTS PAR PULVÉRISATION DE PLASMA À TEMPÉRATURE CONTRÔLÉE

(30) Priority: 28.07.2017 US 201715662871
(43) Date of publication of application: 30.01.2019
(73) Proprietor: United Technologies Corporation, Farmington, CT 06032 (US)
(72) Inventor: AHMADIAN, Shayan, Oakdale, CT Connecticut 06370 (US); SCHLICHTING, Kevin W., South Glastonbury, CT Connecticut 06073 (US)
(74) Representative: Dehns

(56) References cited:
- EP-A2- 1 752 553
- CN-A- 105 483 619
- FR-A1- 2 756 756
- RU-C2- 2 164 264
- US-A- 5 897 921
- US-A1- 2008 087 359
- US-B1- 6 537 605

## Description

### BACKGROUND

The present disclosure relates generally to plasma spraying and, more particularly, to equipment for workpiece temperature control during plasma spraying.

Superalloy components in various industries, including components for gas turbine engines are often protected by thermal barrier coatings (TBCs). Driven in part by higher inlet temperature requirements of modern gas turbine engines, high volume production of TBC components has attracted greater attention.

The TBC is often applied by plasma spray coating processes such as suspension plasma spray (SPS) and solution precursor plasma spray (SPPS). Substrate temperature plays a significant role in the coating microstructure as well as substrate adherence. The coating material is typically deposited by a torch "scan" over the substrate. The torch makes passes over the substrate at a predefined distance to control both deposition and temperature in the application area. In many plasma deposition applications, workpieces are attached to a turntable that is rotated as the plasma torch is vertically scanned. This configuration facilitates deposition and temperature distribution as the distance can be adjusted continuously to reduce thermal shock. This may be advantageous due to the thermal expansion mismatch between the ceramic coating application on a metallic substrate.

Multi-layer coatings provide enhanced capability as certain materials and microstructures may be designed for each layer based on application requirements with regard to coating spall. The deposition of different materials is achieved by switching between materials for each layer. At each switch, sufficient time needs to be apportioned for the torch to reach a desirable steady state to minimize coating process defects. Allotting the required time may result in a non-uniform substrate temperature decrease due to the workpiece complexities. This may disadvantageously affect the coating microstructure and increase the potential for thermal shock during application.

RU 2 164 264 discloses a prior art plasma spray system as set forth in the preamble of claim 1.

FR 2 756 756 discloses a prior art method and device for producing a coating on a substrate.

US 2008/087359 A1 discloses a prior art thermal deposition surface treatment method, system and product.

### SUMMARY

From a first aspect, the invention provides a plasma spray system as recited in claim 1.

In preferred embodiments of the present invention the application zone is about 0.5 inches (12.7 millimeters) in diameter on the workpiece.

In preferred embodiments of the present invention the temperature sensor is an infrared camera.

In preferred embodiments of the present invention the heater is an infrared heater.

In preferred embodiment of the present invention the chiller includes a compressed air system to spray cool air. The compressed air may be sprayed onto a backside of the workpiece to define a cooling zone upstream of the application zone opposite the heating zone, and/or the measurement zone may be upstream of the heating zone.

The invention also provides a method for plasma spraying a workpiece as recited in claim 9.

In preferred embodiments, the present invention comprises sizing the measurement zone, the heating zone, and the application zone on the workpiece to be equivalent.

In preferred embodiments of the present invention the cooling zone is on a backside of the workpiece opposite the heating zone, either the heating or cooling being performed to obtain the desired temperature in response to the sensing.

In preferred embodiments of the present invention the measurement zone, the heating zone, and the application zone are about the same size.

In preferred embodiments of the present invention the measurement zone, the heating zone, and the application zone are arranged horizontally.

In preferred embodiments of the present invention the measurement zone, the heating zone, and the application zone are each about 0.5 inches (12.7 millimeters) in diameter.

The foregoing features and elements may be combined in various combinations without exclusivity, unless expressly indicated otherwise. These features and elements as well as the operation of the invention will become more apparent in light of the following description and the accompanying drawings. It should be appreciated, however, that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic view of a plasma spray system architecture.
FIG. 2 is a schematic view of a plasma spray control subsystem according to one disclosed non-limiting embodiment.
FIG. 3 is a schematic view of a measurement zone, a heating zone and an application zone according to one disclosed non-limiting embodiment.
FIG. 4 is a flow diagram of a method of applying a plasma coating according to one disclosed non-limiting embodiment.
FIG. 5 is a face view of a workpiece at room temperature prior to being coated in accordance with the method of FIG 3.
FIG. 6 is a face view of one step of a workpiece being coated after preheating in accordance with the method of FIG 3.
FIG. 7 is a face view of one step of a workpiece being coated with a first layer in accordance with the method of FIG 3.
FIG. 8 is a face view of one step of a workpiece being coated with a second layer in accordance with the method of FIG 3.
FIG. 9 is a flow diagram for a method to plasma spray a workpiece in an adjusted temperature zone.

### DETAILED DESCRIPTION

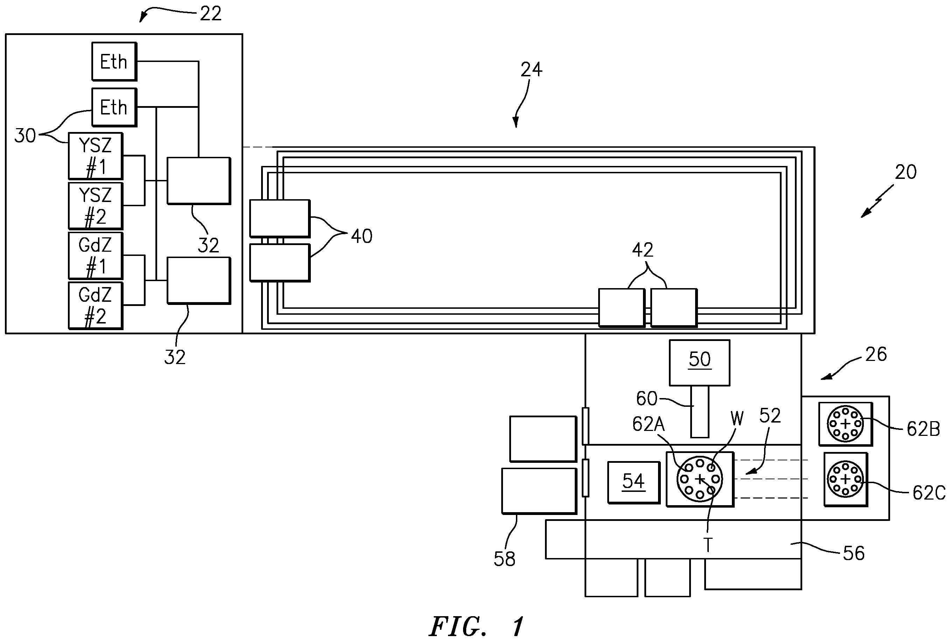

FIG. 1 schematically illustrates a plasma spray system 20 for a workpiece W. In various disclosed non-limiting embodiments, the workpiece W may include, but not be limited to, a component of a gas turbine engine, such as a combustor liner panel, turbine blade, turbine vane, blade outer air seal, or other such component. Other workpieces W that require a plasma coating are found in many industries and are not limited to those recited herein.

In various embodiments, the plasma coating may be deposited onto the workpiece W with a suspension plasma spraying ("SPS") process. SPS involves dispersing a ceramic feedstock into a liquid suspension prior to injection into a plasma torch. The coating material may be deposited, for example, by a solution precursor plasma spray ("SPPS") process, in which a solution of coating precursors is atomized and injected into a direct current (DC) plasma torch. SPPS refers to a specific process where the feedstock is a solution of salts in a solvent. The solution is injected into the plasma stream and the droplets go through chemical and physical changes, including pyrolization, to form particles and deposit the coating. SPS refers to the use of a solution where nanometer sized particles are suspended in a fluid, either solvent or water based. The solution is then injected into the plasma and the fluid carrier is burned off and the particles become molten or semi-molten and build up to form the coating. The feedstocks of the two coatings may thus be different. It should be appreciated that the plasma spray system 20 can be used for other materials as well as blended materials, either two dissimilar ceramics or a metallic and ceramic.

The plasma spray system 20 generally includes a suspension bay 22, a feeder bay 24 and at least one spray booth 26. It should be appreciated that various other arrangements as well as additional or alternative bays will also benefit herefrom.

The suspension bay 22 generally stores containers 30 of materials in a space segregated within the plasma spray system 20. Although illustrated as two different materials in two different supplies for a multi-layer thermal barrier coating, it should be appreciated that any number of different material supplies will benefit herefrom. The feedstock materials for the thermal barrier coating are stored within the suspension bay 22 and may include an ethanol-based or water-based system for a plasma sprayed thermal barrier coating that includes, for example, yttria-stabilized zirconia (YSZ) which is a zirconium-oxide based ceramic powder, gadolinium zirconate (GdZ) and an ethanol (Eth) carrier. The feedstock materials may be, for example, fully premixed outside of this system into a single container or as separate parts in separate containers then mixed in the mixing units 32 before communication to the feeder bay 24.

The feeder bay 24 generally includes pumps 40 and a feeder system 42 for each spray booth 26 to supply materials thereto and provide individual control. The spray booth 26 generally includes a plasma spray subsystem 50, a turntable subsystem 52, a wash subsystem 54, a collection subsystem 56, and a control subsystem 58. It should be appreciated that various other architectures to receive various other workpieces will also benefit herefrom.

The plasma spray subsystem 50 includes a robotic manipulated plasma spray torch 60 operated by the control subsystem 58. The plasma spray torch 60 is operable to apply a plasma sprayed thermal barrier coating supplied from the suspension bay 22 by the feeder bay 24. The plasma spray torch 60 may use axial, radial, and other combinations of injection modes to coat the workpieces W as the turntable subsystem 52 rotates about axis T to provide relatively high manufacturing rates at significant deposition efficiencies.

The turntable subsystem 52 generally includes a multiple of turntables 62, each of which is operable to position the multiple of workpieces W with respect to the plasma spray torch 60. That is, one turntable 62A supports the workpieces W for the plasma spray operation while one or more other turntables 62B, 62C undergo workpiece W load/unload operations. The plasma spray torch 60 is thereby essentially always in operation to maximize production capacity and efficiency.

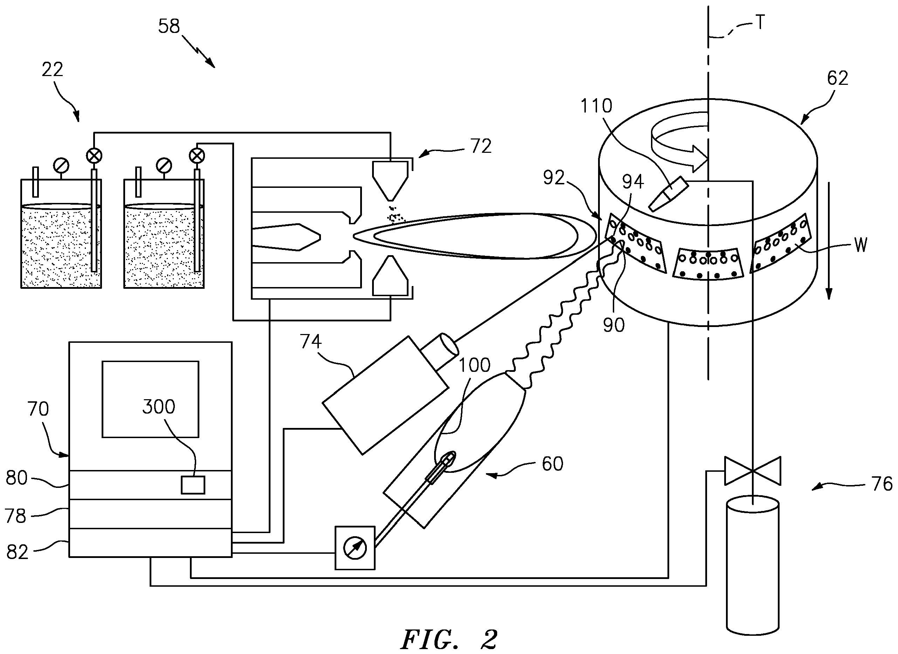

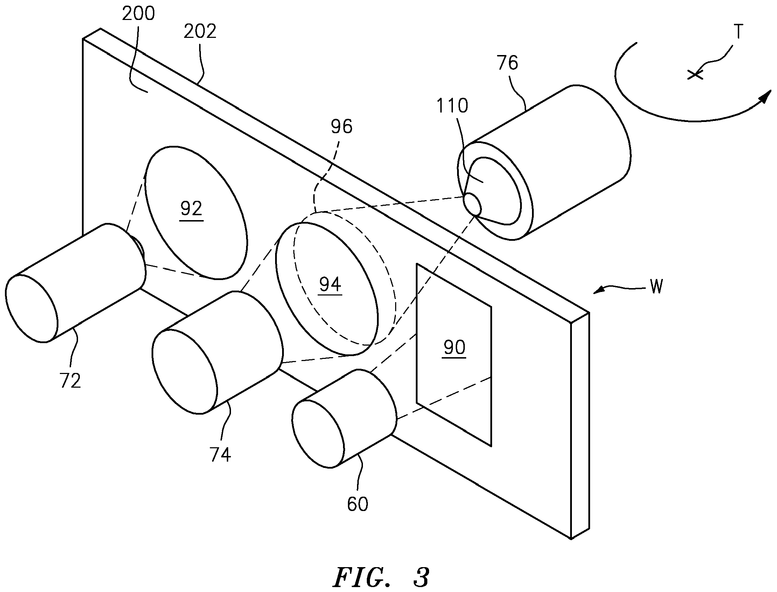

With reference to FIG. 2, the control subsystem 58 generally includes a control 70, a temperature sensor 72, a heater 74, and a chiller 76 defined with respect to one another around the turntable 62. The control 70 generally includes a processor 78, a memory 80, and an interface 82. The processor 78 may be any type of microprocessor having desired performance characteristics. The memory 80 may include any type of computer readable medium which stores the data and control algorithms described herein such as an active temperature control method 300 (FIG. 3). Other operational software for the processor 78 may also be stored in the memory 80 to provide both manual and automatic programmable logic controller (PLC) inputs. The interface 82 facilitates communication with other subsystems such as the plasma spray subsystem 50, the turntable 62, the temperature sensor 72, the heater 74, and the chiller 76. The control 70 may be centralized or distributed.

With reference also to FIG. 3, the temperature sensor 72 is operable to identify a heat signature of an area on the workpiece W at a measurement zone 92. The temperature sensor 72, may be, for example, a thermal camera, an infrared camera, a semiconductor-based temperature sensor, or other measurement device. The temperature sensor 72 may be robotically manipulated in conjunction with the plasma spray torch 60 by the control subsystem 58 to maintain a sequential relationship between the measurement zone 92 and the application zone 90. Alternatively, the temperature sensor 72 may be independently controlled to adjust the location of the measurement zone 92. The measurement zone 92, for example, may be about 0.5 inches (12.7 millimeters) in diameter on the workpiece W.

The heater 74 is operable to selectively heat the workpiece W at a heating zone 94 in response to the control 70 determining the temperature of the workpiece W in the measurement zone 92. The heating zone 94 is downstream of the measurement zone 92. The heater 74 may be, for example, an infrared heater with a parabolic reflector 100 to locally heat the heating zone 94 on a front side 200 of the workpiece W that is being coated. The heater 74 may be robotically manipulated in conjunction with the plasma spray torch 60 by the control subsystem 58 to maintain a sequential relationship between the heating zone 94, the measurement zone 92, and the application zone 90. That is, the spatial relationship between the measurement zone 92, the heating zone 94, and the application zone 90 may be maintained relative to each other as the workpiece W is moved by the turntable 62 with respect thereto. The measurement zone 92 is upstream of the heating zone 94, and the heating zone 94 is upstream of application zone 90. Alternatively, the spatial relationship of the measurement zone 92, the heating zone 94, and the application zone 90 may be adjusted by the control 70 to optimize application. The heating zone 94, for example may be about 0.5 inches (12.7 millimeters) in diameter on the workpiece W.

The chiller 76 is operable to selectively cool an area of the workpiece W at a cooling zone 96 in response to the control 70. The chiller 76, for example, may be a compressed air system to spray cool air onto a backside 202 of the workpiece W from an air jet 110 to define the cooling zone 96. The chiller 76 may also be robotically manipulated in conjunction with the plasma spray torch 60 by the control subsystem 58 to maintain a sequential relationship between the cooling zone 96, the heating zone 94, the measurement zone 92, and the application zone 90. The cooling zone 96, for example, may be about 0.5 inches (12.7 millimeters) in diameter on the workpiece W. The cooling zone 96 may be directly opposite the heating zone 94 to affect an opposite side of the workpiece W. Typically, only the chiller 76 or the heater 74 will be operational at one time to adjust the temperature of the workpiece W upstream of the application zone 90 but downstream of the measurement zone 92. The control 70 is operable to determine the necessary cooling or heating to assure that that application zone 90 is at an optimal temperature to receive the plasma spray in the application zone 90 of an area of the workpiece W at application of the thermal barrier coating.

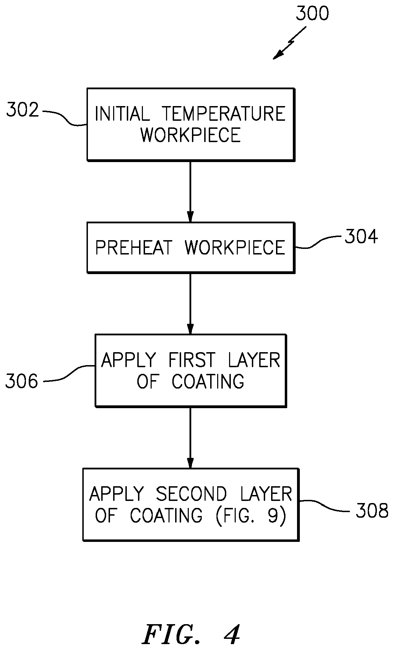

With reference to FIG. 4, the method 300 for plasma spraying the workpiece W is schematically disclosed in terms of a functional block diagram flowchart. It should be appreciated that alternative or additional steps may be provided without departing from the teaching herein.

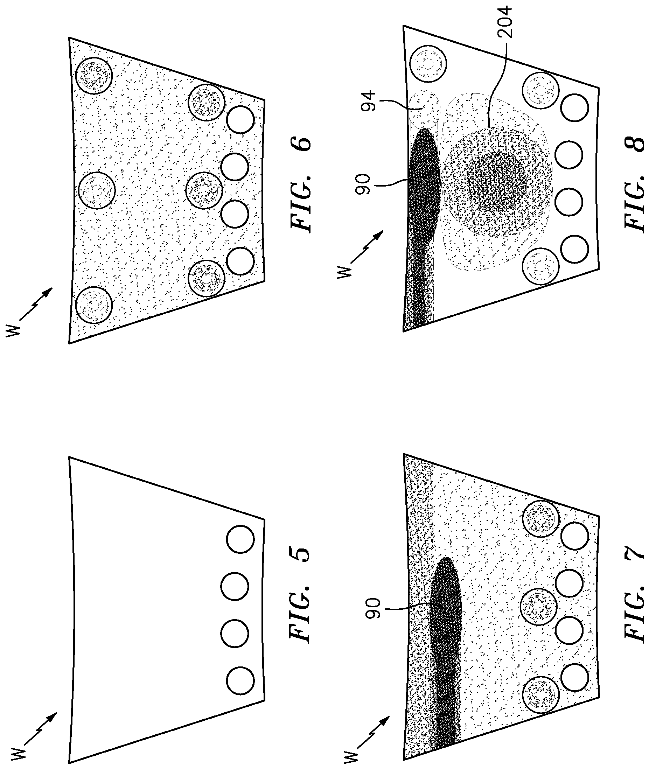

Initially, in one embodiment, the workpiece W may begin (302; FIG. 5) at a room temperature when loaded onto the turntable 62. That is, the turntable 62 is rotated about an axis T to move the workpiece W with respect to the temperature sensor 72, the heater 74, the chiller 76, and the plasma spray torch 60 such that the measurement zone 92, the heating zone 94, the cooling zone 96, and the application zone 90 are horizontally arranged and horizontally traverse across the moving workpiece W (FIG. 3).

Next, the entire workpiece W is preheated (304; FIG. 6). The workpiece W may be preheated by, for example, the heat from the plasma spray torch 60 which is operated without feedstock material. Alternatively, or in addition, the heater 74 may be utilized to provide the preheating, or the workpiece W may be previously located in an oven to uniformly increase the temperature of the workpiece W. For the plasma spray application of the thermal barrier coating, which is usually a ceramic material, the workpiece W is preheated to facilitate receipt of the ceramic material as the ceramic material has a lower coefficient of thermal expansion than the metallic substrate of the workpiece W. Increasing the temperature of the metallic substrate of the workpiece W facilitates receipt of the ceramic material.

Next, the plasma spray torch 60 applies (306; FIG. 7) a first layer of the coating. The plasma spray torch 60 applies the plasma coating into the application zone 90 of the workpiece W. The application zone 90, for example, maybe about 0.5 inches (12.7 millimeters) in diameter on the workpiece W. The component temperatures are on the order of 500-600 degree Fahrenheit (216-316 degree Celsius) range for plasma spray, while a low pressure plasma spray within a partial vacuum may be 1500-1700 degree Fahrenheit (816-871 degree Celsius) range. The plasma spray torch 60 temperature may be on the order of 10,000 -20,000 degree Fahrenheit (5,538-11,093°C).

As the first layer of a multi-layer ceramic coating is applied to the preheated workpiece W, the temperature of the workpiece W remains relatively stable and uniform during application of the first layer. The workpiece W typically has a relatively complicated geometry. The complicated geometry results in the workpiece W cooling in a non-uniform manner which may potentially result in a temperature gradient (204: FIG. 8) on the workpiece W. The temperature gradient may disadvantageously affect application of a second layer of the multi-layer ceramic coating. That is, the workpiece W may cool significantly and non-uniformly during the feed switch between the first layer application to the second layer application. This temperature gradient may result in residual stress in the workpiece W such that coating adhesion and durability may be reduced.

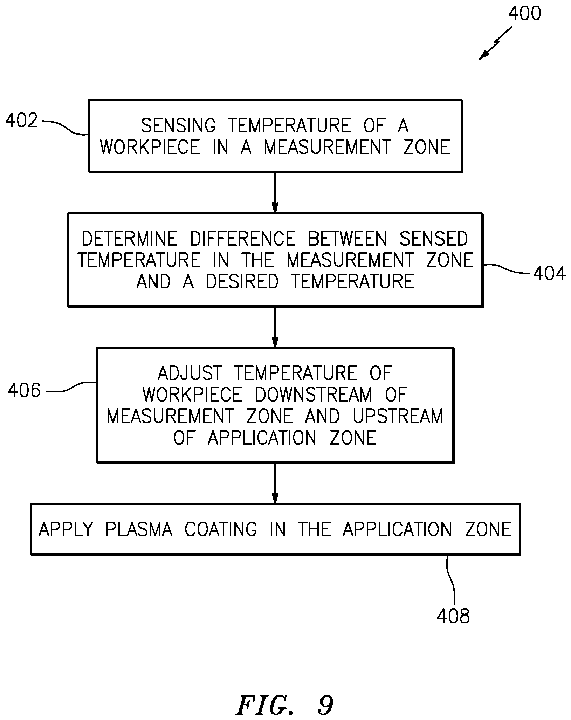

With reference to FIG. 9, a method 400 for plasma spraying a workpiece includes application (308; FIG. 8) of the second layer of the coating by the plasma spray torch 60, the temperature sensor 72 is sensing (402) a temperature at the measurement zone 92 on the workpiece W. The temperature within the measurement zone 92 is utilized by the control subsystem 58 to determine a difference (404) between the sensed temperature and a desired temperature for effective application of the coating material.

Next, as the second layer of the coating is then being applied (308; FIG. 8), the control subsystem 58 operates the heater 74 or the chiller 76 to adjust the temperature (406) of the heating zone 94 or the cooling zone 96 upstream of the application zone 90 as the workpiece W is rotated on the turntable 62. That is, the workpiece W is being rotated by the turntable 62 so that the measurement zone 92, is upstream of the application zone 90.

In one embodiment, an infrared heater can emit light at different wavelengths. To heat the surface of the ceramic layer, a relatively longer wavelength may be utilized. To heat the substrate through the ceramic layer, a relatively shorter wavelength may be utilized such that the ceramic layer would essentially be transparent to the heater 74.

The plasma spray torch 60 then applies (408) the plasma coating in the application zone 90 which has been temperature adjusted. The process then continues as the turntable 62 is rotated about an axis T to move the workpiece W with respect to the temperature sensor 72, the heater 74, the chiller 76, and the plasma spray torch 60. The temperature sensor 72, the heater 74, the chiller 76, and the plasma spray torch 60 may then be traversed vertically to proceed across the next horizontal scan of the workpiece as the turntable rotates.

Although particular step sequences are shown, described, and claimed, it should be appreciated that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations of the invention will fall within the scope of the appended claims. It is therefore to be appreciated that within the scope of the appended claims, the invention may be practiced other than as specifically described. For that reason the appended claims should be studied to determine the scope of the invention.

## Claims

1. A plasma spray system (20) for providing a multi-layer barrier coating, comprising:
a temperature sensor (72) operable to determine a temperature of a workpiece (W) in a measurement zone (92);
a heater (74) operable to selectively heat the workpiece (W) in a heating zone (94) downstream of the measurement zone (92);
a plasma spray subsystem (50) operable to plasma spray the workpiece (W) in an application zone (90) downstream of the heating zone (94); and
a control (70) in communication with the plasma spray subsystem (50), the temperature sensor (72), and the heater (74), the control (70) operable to control the heater (74) to heat the workpiece (W) in the heating zone (94) in response to the temperature of the workpiece (W) in the measurement zone (92) such that the workpiece (W) in the application zone (90) is at a desired temperature to receive the plasma spray;
**characterised by** a turntable (62;62A;62B;62C) operable to move the workpiece (W) with respect to the temperature sensor (72), the heater (74), and the plasma spray subsystem (50) such that the workpiece (W) sequentially traverses through the measurement zone (92), the heating zone (94), then the application zone (90); and
a chiller (76) in communication with the control (70), the chiller (76) operable to selectively cool the workpiece (W) in a cooling zone (96) downstream of the measurement zone (92).

2. The system (20) as recited in claim 1, wherein the application zone (90) is about 0.5 inches (12.7 millimeters) in diameter on the workpiece (W).

3. The system (20) as recited in any preceding claim, wherein the temperature sensor (72) is an infrared camera (72).

4. The system (20) as recited in any preceding claim, wherein the heater (74) is an infrared heater (74).

5. The system (20) as recited in any preceding claim, wherein the chiller (76) includes a compressed air system (110) to spray cool air.

6. The system (20) as recited in claim 5, wherein the compressed air is sprayed onto a backside (202) of the workpiece (W) to define the cooling zone (96) upstream of the application zone (90) opposite the heating zone (94).

7. The system (20) as recited in claim 5 or 6, wherein the measurement zone (92) is upstream of the heating zone (94).

8. The system (20) as recited in claim 7, wherein the heating zone (94) is upstream of the application zone (90).

9. A method for plasma spraying a workpiece (W) to provide a multi-layer barrier coating, comprising:
sensing a temperature in a measurement zone (92) on a workpiece (W);
heating the workpiece (W) in a heating zone (94) downstream of the measurement zone (92) to a desired temperature in response to the sensing;
applying a plasma spray coating to the workpiece (W) downstream of the heating zone (94) such that the workpiece (W) in an application zone (90) is at a desired temperature to receive the plasma spray;
moving the workpiece (W) to sequentially traverse the workpiece (W) with respect to the measurement zone (92), the heating zone (94), and then the application zone (90);
maintaining a sequential relationship of the measurement zone (92), the heating zone (94), and the application zone (90) on the workpiece (W); and
cooling a cooling zone (96) on the workpiece (W) downstream of the measurement zone (92) to a desired temperature in response to the sensing.

10. The method as recited in claim 9, further comprising:
sizing the measurement zone (92), the heating zone (94), and the application zone (90) on the workpiece (W) to be equivalent.

11. The method as recited in claim 9 or 10, wherein the cooling zone (96) is on a backside (202) of the workpiece (W) opposite the heating zone (94), either the heating or cooling being performed to obtain the desired temperature in response to the sensing.

12. The method as recited in any of claims 9 to 11, wherein the measurement zone (92), the heating zone (94), and the application zone (90) are about the same size.

13. The method as recited in claim 12, wherein the measurement zone (92), the heating zone (94), and the application zone (90) are about 0.5 inches (12.7 millimeters) in diameter.

14. The method as recited in any of claims 9 to 13, wherein the measurement zone (92), the heating zone (94), and the application zone (90) are arranged horizontally.

## Patentansprüche

1. Plasmasprühsystem (20) zum Bereitstellen einer mehrschichtigen Sperrbeschichtung, umfassend:
einen Temperatursensor (72), der dazu betrieben werden kann, eine Temperatur eines Werkstücks (W) in einer Messzone (92) festzustellen;
eine Heizung (74), die dazu betrieben werden kann, das Werkstück (W) in einer Heizzone (94) stromabwärts der Messzone (92) selektiv zu erwärmen;
ein Plasmasprühuntersystem (50), das dazu betrieben werden kann, das Werkstück (W) in einer Anwendungszone (90) stromabwärts der Heizzone (94) dem Plasmasprühen zu unterziehen; und
eine Steuerung (70) in Kommunikation mit dem Plasmasprühuntersystem (50), dem Temperatursensor (72) und der Heizung (74), wobei die Steuerung (70) dazu betrieben werden kann, die Heizung (74) so zu steuern, dass sie das Werkstück (W) in der Heizzone (94) als Reaktion auf die Temperatur des Werkstücks (W) in der Messzone (92) erwärmt, so dass das Werkstück (W) in der Anwendungszone (90) eine gewünschte Temperatur aufweist, um das Plasmasprühen zu erhalten;
**gekennzeichnet durch** eine Drehscheibe (62; 62A; 62B; 62C), die dazu betrieben werden kann, das Werkstück (W) in Bezug auf den Temperatursensor (72), die Heizung (74) und das Plasmasprühuntersystem (50) derart zu bewegen, dass das Werkstück (W) nacheinander die Messzone (92), die Heizzone (94), dann die Anwendungszone (90) durchläuft; und
einen Kühlapparat (76) in Kommunikation mit der Steuerung (70), wobei der Kühlapparat (76) dazu betrieben werden kann, das Werkstück (W) in einer Kühlzone (96) stromabwärts der Messzone (92) selektiv zu kühlen.

2. System (20) nach Anspruch 1, wobei die Anwendungszone (90) etwa 0,5 Zoll (12,7 Millimeter) im Durchmesser auf dem Werkstück (W) beträgt.

3. System (20) nach einem der vorstehenden Ansprüche, wobei der Temperatursensor (72) eine Infrarotkamera (72) ist.

4. System (20) nach einem der vorstehenden Ansprüche, wobei die Heizung (74) eine Infrarotheizung (74) ist.

5. System (20) nach einem der vorstehenden Ansprüche, wobei der Kühlapparat (76) eine Druckluftanlage (110) zum Sprühen kalter Luft beinhaltet.

6. System (20) nach Anspruch 5, wobei die Druckluft auf eine Rückseite (202) des Werkstücks (W) gesprüht wird, um die Kühlzone (96) stromaufwärts der Anwendungszone (90) gegenüber der Heizzone (94) zu definieren.

7. System (20) nach Anspruch 5 oder 6, wobei die Messzone (92) stromaufwärts der Heizzone (94) liegt.

8. System (20) nach Anspruch 7, wobei die Heizzone (94) stromaufwärts der Anwendungszone (90) liegt.

9. Verfahren zum Plasmasprühen eines Werkstücks (W), um eine mehrschichtige Barrierebeschichtung bereitzustellen, umfassend:
Erfassen einer Temperatur in einer Messzone (92) an einem Werkstück (W);
Erwärmen des Werkstücks (W) in einer Heizzone (94) stromabwärts der Messzone (92) auf eine erwünschte Temperatur als Reaktion auf das Erfassen;
Aufbringen einer Plasmasprühbeschichtung auf das Werkstück (W) stromabwärts der Heizzone (94) derart, so dass das Werkstück (W) in einer Anwendungszone (90) eine erwünschte Temperatur aufweist, um das Plasmasprühen zu erhalten;
Bewegen des Werkstücks (W), so dass das Werkstück (W) nacheinander die Messzone (92), die Heizzone (94) und dann die Anwendungszone (90) durchläuft;
Aufrechterhalten einer Abfolgebeziehung der Messzone (92), der Heizzone (94) und der Anwendungszone (90) an dem Werkstück (W); und Kühlen einer Kühlzone (96) an dem Werkstück (W) stromabwärts der Messzone (92) auf eine erwünschte Temperatur als Reaktion auf das Erfassen.

10. Verfahren nach Anspruch 9, ferner umfassend:
Bemessen der Messzone (92), der Heizzone (94) und der Anwendungszone (90) an dem Werkstück (W) derart, dass sie gleich sind.

11. Verfahren nach Anspruch 9 oder 10, wobei die Kühlzone (96) sich an einer Rückseite (202) des Werkstücks (W) gegenüber der Heizzone (94) befindet, wobei entweder Erwärmen oder Kühlen durchgeführt wird, um die erwünschte Temperatur als Reaktion auf das Erfassen zu erhalten.

12. Verfahren nach einem der Ansprüche 9 bis 11, wobei die Messzone (92), die Heizzone (94) und die Anwendungszone (90) in etwa gleich groß sind.

13. Verfahren nach Anspruch 12, wobei die Messzone (92), die Heizzone (94) und die Anwendungszone (90) etwa 0,5 Zoll (12,7 Millimeter) im Durchmesser betragen.

14. Verfahren nach einem der Ansprüche 9 bis 13, wobei die Messzone (92), die Heizzone (94) und die Anwendungszone (90) horizontal angeordnet sind.

## Revendications

1. Système de pulvérisation de plasma (20) pour fournir un revêtement protecteur multicouche, comprenant :
un capteur de température (72) pouvant être utilisé pour déterminer une température d'une pièce à usiner (W) dans une zone de mesure (92) ;
un élément chauffant (74) pouvant être utilisé pour chauffer sélectivement la pièce à usiner (W) dans une zone de chauffage (94) en aval de la zone de mesure (92) ;
un sous-système de pulvérisation de plasma (50) pouvant être utilisé pour pulvériser au plasma la pièce à usiner (W) dans une zone d'application (90) en aval de la zone de chauffage (94) ; et
une commande (70) en communication avec le sous-système de pulvérisation de plasma (50), le capteur de température (72) et l'élément chauffant (74), la commande (70) pouvant être utilisée pour commander l'élément chauffant (74) afin de chauffer la pièce à usiner (W) dans la zone de chauffage (94) en réponse à la température de la pièce à usiner (W) dans la zone de mesure (92) de sorte que la pièce à usiner (W) dans la zone d'application (90) est à une température souhaitée pour recevoir la pulvérisation de plasma ;
**caractérisé par** un plateau tournant (62 ; 62A ; 62B ; 62C) pouvant être utilisé pour déplacer la pièce à usiner (W) par rapport au capteur de température (72), à l'élément chauffant (74) et au sous-système de pulvérisation de plasma (50) de sorte que la pièce à usiner (W) traverse séquentiellement la zone de mesure (92), la zone de chauffage (94), puis la zone d'application (90) ; et
un refroidisseur (76) en communication avec la commande (70), le refroidisseur (76) pouvant être utilisé pour refroidir sélectivement la pièce à usiner (W) dans une zone de refroidissement (96) en aval de la zone de mesure (92).

2. Système (20) selon la revendication 1, dans lequel la zone d'application (90) a un diamètre d'environ 0,5 pouce (12,7 millimètres) sur la pièce à usiner (W).

3. Système (20) selon une quelconque revendication précédente, dans lequel le capteur de température (72) est une caméra infrarouge (72).

4. Système (20) selon une quelconque revendication précédente, dans lequel l'élément chauffant (74) est un élément chauffant infrarouge (74).

5. Système (20) selon une quelconque revendication précédente, dans lequel le refroidisseur (76) comporte un système à air comprimé (110) pour pulvériser de l'air froid.

6. Système (20) selon la revendication 5, dans lequel l'air comprimé est pulvérisé sur une face arrière (202) de la pièce à usiner (W) pour définir la zone de refroidissement (96) en amont de la zone d'application (90) opposée à la zone de chauffage (94) .

7. Système (20) selon la revendication 5 ou 6, dans lequel la zone de mesure (92) est en amont de la zone de chauffage (94) .

8. Système (20) selon la revendication 7, dans lequel la zone de chauffage (94) est en amont de la zone d'application (90) .

9. Procédé pour pulvériser au plasma une pièce à usiner (W) afin de fournir un revêtement protecteur multicouche, comprenant :
la détection d'une température dans une zone de mesure (92) sur une pièce à usiner (W) ;
le chauffage de la pièce à usiner (W) dans une zone de chauffage (94) en aval de la zone de mesure (92) à une température souhaitée en réponse à la détection ;
l'application d'un revêtement par pulvérisation de plasma sur la pièce à usiner (W) en aval de la zone de chauffage (94) de sorte que la pièce à usiner (W) dans une zone d'application (90) est à une température souhaitée pour recevoir la pulvérisation de plasma ;
le déplacement de la pièce à usiner (W) pour traverser séquentiellement la pièce à usiner (W) par rapport à la zone de mesure (92), à la zone de chauffage (94), puis à la zone d'application (90) ;
le maintien d'une relation séquentielle entre la zone de mesure (92), la zone de chauffage (94) et la zone d'application (90) sur la pièce à usiner (W) ; et
le refroidissement d'une zone de refroidissement (96) sur la pièce à usiner (W) en aval de la zone de mesure (92) à une température souhaitée en réponse à la détection.

10. Procédé selon la revendication 9, comprenant en outre :
le dimensionnement de la zone de mesure (92), de la zone de chauffage (94) et de la zone d'application (90) sur la pièce à usiner (W) de manière équivalente.

11. Procédé selon la revendication 9 ou 10, dans lequel la zone de refroidissement (96) est sur un côté (202) de la pièce à usiner (W) opposé à la zone de chauffage (94), le chauffage ou le refroidissement étant effectué pour obtenir la température souhaitée en réponse à la détection.

12. Procédé selon l'une quelconque des revendications 9 à 11, dans lequel la zone de mesure (92), la zone de chauffage (94) et la zone d'application (90) ont approximativement la même taille.

13. Procédé selon la revendication 12, dans lequel la zone de mesure (92), la zone de chauffage (94) et la zone d'application (90) ont un diamètre d'environ 0,5 pouce (12,7 millimètres).

14. Procédé selon l'une quelconque des revendications 9 à 13, dans lequel la zone de mesure (92), la zone de chauffage (94) et la zone d'application (90) sont agencées horizontalement.
